# EUROPEAN PATENT APPLICATION

(11) **EP 1 632 899 A1**
(43) Date of publication of application: **08.03.2006**
(21) Application number: 03736131.8
(22) Date of filing: 10.06.2003
(51) Int. Cl.: G06T 1/00

(54) **IMAGE REGISTER, DISPLAY CONTROLLER, IMAGE SERVER**

(71) Applicant: FUJITSU LIMITED, Kawasaki-shi, Kanagawa 211-8588 (JP)
(72) Inventor: TAKIYAMA, Shushi Fujitsu Personal Computer Systems, Inagi-shi, Tokyo 206-0801 (JP)
(74) Representative: Sunderland, James Harry
(86) International application number: PCT/JP2003/007364
(87) International publication number: WO 2004/111932

(57) **Abstract**

An image management system comprising means for receiving a registration request of image from a terminal, means for receiving a designation of rotation attributes for specifying the rotational state of an image when it is displayed for a registered image, means for determining only one rotation attribute of the image according to a specified criterion when a plurality of rotation attributes are designated for one image, and means for delivering an image with a rotation attribute thus determined.

## Description

### Technical Field

The present invention relates to handling of an image data, such as a registration of an image, a delivery of a registered image, or a display of a delivered image.

### Background Art

Conventionally, when an image is photographed by using a digital camera or the like (hereafter, referred to as a camera), the camera may be held horizontally for photographing, or the camera may be rotated by 90 degrees from a horizontal direction to be held in a vertical line direction (hereafter, referred to as a vertical direction) for photographing. In such cases, the orientation of the photographed image data (such as the top-to-bottom relationship, left-to-right relationship, and the inclination) depends on the direction in which the camera is held (e. g. , the horizontal direction, the vertical direction), and may not coincide with an actual orientation of the subject. For example, there is a case where the image data is displayed to be upside down.

Let us suppose a case where the foregoing image data is stored as it is without making any change thereto. For example, in a case where the foregoing image data, which is erroneously defined in terms of its rotation direction, is shared by a plurality of members in a server of a network, each member who downloads the image data finds it to be rotated and inclined at an improper angle. Thus, each member rotates the image in a personal computer, or in local mode.

In such a case, only the image of the member carrying out the foregoing rotation operation is changed to a normal direction and locally stored. The image data on the server is still set to the erroneous setting direction. Thus, each time one of the othermembers downloads the shared image data, the rotational state of the image data must be set in a local environment.

Also, in the terminal dedicated to the image display that does not have the function for changing the rotational state of the image data in the local environment, the image in abnormal rotational state, for example, the image turned upside down, is to be displayed.

In order to avoid the foregoing troubles, a user (an image photographer or the like) who provides the image data must check the rotational state of the image and make change thereto as necessary before registering the image data in the server.

### Disclosure of the Invention

The present invention is proposed in view of the problems of the prior art as mentioned above. That is, an object of the present invention is to provide a technology with which a rotational state can be easily set for an image data to be used by a plurality of persons and managed.

In order to solve the above-mentioned problems, the present invention adopted means as follows. That is, the present invention provides an image registration apparatus for registering an image in a server for managing the image, including:
means for displaying the image;
means for receiving a setting of a rotation attribute for defining a rotational state of the image when the image is displayed; and
means for combining the image with the rotation attribute and registering the image in the server.

According to the present invention, it is possible to display the image, and set the rotation attributes when the image is displayed, and combine the image with the rotation attribute and register the image in the server. Here, the rotation attribute when the image is displayed is, for example, the rotation angle with the standard position on the image as the center. Setting the rotation attribute can make a change in the image, which was rotated by the erroneous angle in such a manner as to be upside down, to a proper angle and then register in the server.

Also, the present invention provides a display control apparatus for controlling a display of an image, which may include:
means for receiving an image data which is delivered from a server managing the image and contains a rotation attribute to define a rotational state of the image and when the image is displayed;
means for detecting an installation direction of a display apparatus for displaying the image;
means for rotating the image with reference to the installation direction; and
the display apparatus for displaying the image thus rotated.

Also, the present invention provides an image display apparatus , which may include:
means for receiving an image data which is delivered from a server managing the image and contains a rotation attribute to define a rotational state of the image when the image is displayed;
means for detecting an installation direction of a display apparatus for displaying the image;
means for rotating the image with reference to the installation direction; and
the display apparatus for displaying the image thus rotated.

According to the present invention, it is possible to detect the installation direction of the display apparatus, rotate the image with reference to the installation direction, and display the image. Here, the installation direction of the display apparatus can be defined as, for example, the rotation angle of the screen, where the normal line passing the screen center of the display apparatus serves as the rotation axis. Thus, for example, even in the situation where the screen is rotated 90 degrees, the rotation attribute can be changed on the basis of its rotation state to display the image at the rotation angle to be originally displayed.

Also, the present invention provides an image management apparatus for managing an image, which may include:
means for receiving a registration request of an image from a terminal apparatus;
means for receiving a designation of a rotation attribute to define a rotational state for an image, which was already registered, when the image is displayed;
means for determining one rotation attribute for an image in accordance with a predetermined criterion when a plurality of rotation attributes are specified for the image; and
means for delivering the image under the rotation attribute thus determined.

According to the present invention, when the registration request of the image was received, the designation of the rotation attribute of the image was received, and the plurality of rotation attributes were specified for one image, one rotation attribute is determined for the image in accordance with the predetermined criterion.

Thus, in an environment where the plurality of users share the image and the rotation attribute with regard to the image, the rotation attributes in the respective images can be uniformed. Also, by delivering the image for which one rotation attribute is determined, it is possible to omit the labor to set the rotation attribute to a proper value at the individual delivery destination.

As mentioned above, according to the present invention, the rotational state can be easily set and managed for an image data to be used by the plurality of persons, and the image data can be delivered to the delivery destination.

Also, the present invention may be a method where an apparatus or an machine such as a computer, or the like is caused to execute any of the foregoing processes. Also, the present invention may be the program which causes the computer, the other apparatus, the machine, or the like to execute any of the foregoing functions. Also, the present invention may be the configuration where the program is recorded in a recording medium that can be read by a computer and the like.

### Brief Description of the Drawings

FIG. 1 is a functional schematic view of an information system according to a best mode of the present invention;
FIG. 2 is a view showing a process example according to the information system;
FIG. 3 is a view showing an example of a terminal 1 used in the information system;
FIG. 4 shows a data structure of a management information that holds a rotation information in a server 2 shown in FIG. 1;
FIG. 5 is a data example of the management information shown in FIG. 4;
FIG. 6 shows a relation between functions of the terminal 1 and the server 2 in the information system;
FIG. 7 is a flowchart showing an image display process in the terminal 1;
FIG. 8 is a flowchart showing a rotation information input process in the terminal 1;
FIG. 9 is a flowchart showing a totalizing result update process of the rotation information in the server 2;
FIG. 10 is a flowchart showing a total process of the rotation information in the server 2;
FIG. 11 is a flowchart showing a determination process of the rotation information in the server 2; and
FIG. 12 is a modification example of a rotation information determination process.

### Best Mode for carrying out the Invention

An information system according to the best mode of the present invention will be described below with reference to the drawings.

### <Functional Schema of Information System>

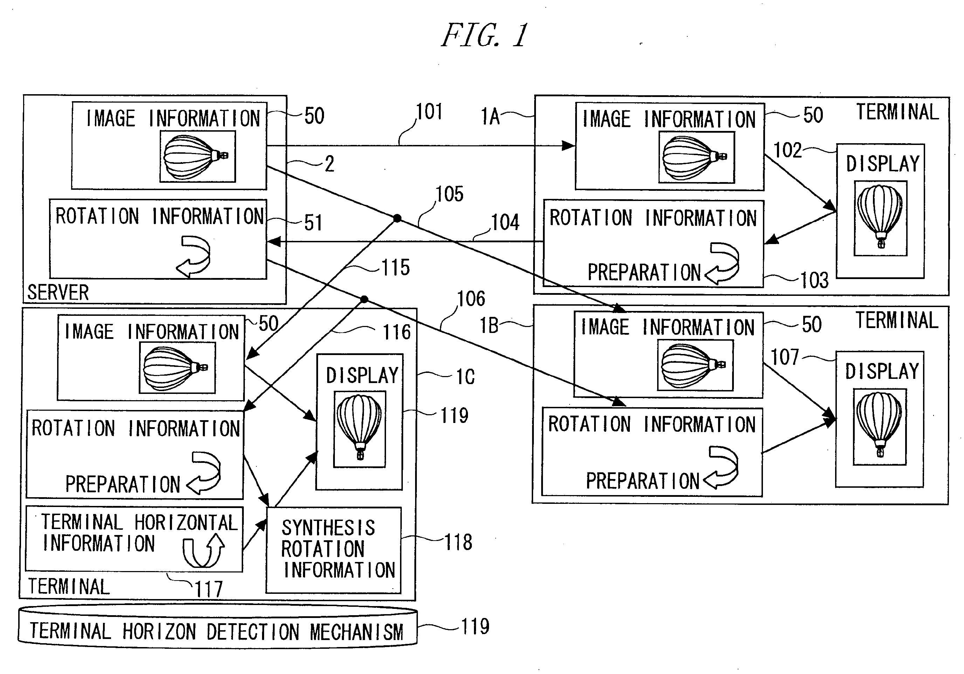

FIG. 1 is a functional schematic view of the information system. The information system has: terminals 1A, 1B, 1C and the like for displaying images; and a server 2. The terminals 1A, 1B, 1C and the like and the server 2 are connected through a network (not shown). Here, the network is a typical data communication network, such as the Internet.

The terminals 1A, 1B, 1C and the like include CPUs, memories, display units, operation units, and communication units. Hereafter, when the terminals 1A, 1B, 1C and the like are collectively called, they are merely referred to as a terminal 1. The terminal 1 is, for example, a personal computer. Also, the display unit is, for example, a liquid crystal display, CRT, or a plasma display. Also, the operation unit is a push button dial, a mouse, a track ball, a joystick, or a keyboard.

The configuration elements and actions of the personal computer are widely known, so their explanations are omitted. However, the terminal 1 may be, for example, an apparatus for displaying an image data photographed by a digital camera or the like, for example, an electro-photograph display apparatus (so-called a digital photo frame and the like). Also as for the electro-photograph display apparatus, since the basic configuration thereof is also widely known as in the case of the personal computer, its explanation is omitted.

Note that, in FIG. 1, the installation angle of the terminal 1C can set by a predetermined angle, for example, by a unit of 90 degrees within the plane substantially vertical to the display direction of its display unit (within the plane substantially vertical to the sight line of a user). In this embodiment, the display unit of the terminal 1C is assumed to have a rectangular screen. Also, in this embodiment, an installation of the terminal 1C in such a manner that a screen thereof is to be a lateral rectangle in a horizontal direction is referred to as a lateral arrangement. On the contrary to the lateral arrangement, an installation of the terminal 1C in such a manner that the screen is rotated 90 degrees within the plane substantially vertical to the display direction is referred to as a longitudinal arrangement.

Moreover, the terminal 1C has a terminal horizon detection mechanism 11. For example, if the state of the lateral arrangement is defined as a standard state, the terminal horizon detection mechanism 11 detects that a rotation angle in such a state is 0 degree. Also, in the state of the longitudinal arrangement where the screen has been rotated 90 degrees in a clockwise direction from the above state of the lateral arrangement, the terminal horizon detection mechanism 11 detects that the rotation angle is 90 degrees. Also, in the state of the lateral arrangement when the screen is further rotated 90 degrees in the clockwise direction from the state of the longitudinal arrangement, the terminal horizon detection mechanism 11 detects that the rotation angle is 180 degrees. Also, in the state of the longitudinal arrangement when the screen is further rotated 90 degrees in the clockwise direction from the state of the lateral arrangement, the terminal horizon detection mechanism 11 detects that the rotation angle is 270 degrees.

Then, when the screen is further rotated by 90 degrees, the terminal 1C is returned to the standard state. In this case, by defining the limit of the rotation angle as 360 degrees and rotating the screen in the opposite direction, the screen may be returned to the original rotational state. Note that, in this embodiment, the rotations in both of the clockwise and counterclockwise directions are referred to as "pivot". Here, an example where the screen of the terminal 1C is rotated by a unit of 90 degrees is explained. However, in this embodiment, the rotation angle of the display unit is not limited to a unit of 90 degrees.

As the detection mechanism of the rotational state (pivot state) as mentioned above, for example, there has been known the mechanism where a pivot mechanism for pivoting the entire display and an angle detection mechanism at the time of the pivot are equipped in the rectangular display, whereby a longitudinal display (a manner in which the rectangular screen is made longitudinal to display information) or a lateral display (a manner in which the rectangular screen is made lateral to display information) can be selected.

Also, the terminal 1 may be configured such that the screen and a body are integrated into a single unit. In such a case, a change from the longitudinal arrangement to the lateral arrangement, or a change from the lateral arrangement to the longitudinal arrangement corresponds to the rotation of the entire terminal 1. The rotation angle of a unit of 90 degrees as mentioned above may be designed to be detected by using, for example, contact switches placed on the outer walls (the four planes of the top, bottom, left, and right) of the body of the terminal 1.

The server 2 include a CPU, a memory, an external storage device, an operation unit, and a communication unit, which are not shown. Also, since the server 2 is the typical computer, an explanation therefor is omitted. Note that, the external storage device includes, for example, a hard disc and a DVD (Digital Versatile Disc, Digital Video Disc).

The function schema of the information system will be described below. One or more pieces of image information and rotation information related to the image information are registered in the server 2. The terminal 1A accesses the server 2 through the network and, downloads, for example, an image information 50 (Arrow 101). Such a download may be performed by executing, for example, a program that is periodically actuated on the terminal 1A.

Rotation information 51 is linked to the image information 50. Thus, when the terminal 1A downloads the image information 50, the rotation information 51 is also downloaded. Then, the terminal 1Arotates the image information 50 in accordance with the designation of the rotation information 51, and display the image information 50 (Screen 102). At this time, in the case where the orientation (rotational state) of the image displayed on the terminal 1A is not correct, e.g. , the image is upside down, the user of the terminal 1A rotates the displayed image, in accordance with a menu on the terminal 1A (103). Moreover, the user uploads the rotation information, which is used when the image is rotated, to the server 2 as the new rotation information (Arrow 104).

Similarly, the terminal 1B also accesses the server 2 through the network, and downloads, for example, the image information 50 from the image information (Arrow 105). Also, the terminal 1B downloads the rotation information 51 linked to the image information 50 (Arrow 106). Then, the terminal 1B rotates the image in accordance with the designation of the rotation information 51 and displays the image (Screen 107). At this time, in the case where the orientation (rotational state) of the image displayed on the terminal 1B is not correct, e.g. , the image is upside down, the user rotates the displayed image in accordance with the menu on the terminal 1B. Moreover, the user of the terminal 1B uploads the rotation information, which is used when the image is rotated, to the server 2 as the new rotation information.

On the other hand, the terminal 1C has the terminal horizon detection mechanism 11 for detecting the installation state (the rotational state of the screen) of the terminal itself. As explained in FIG. 1, by using the terminal horizon detection mechanism 11, the terminal 1C uses a predetermined standard line (for example, a normal line passing through the center of the screen) as the rotation center, and detects a rotation angle within the plane substantially vertical to the display direction.

Also, the terminal 1C accesses the server 2 through the network, similarly to the terminals 1A, 1B, and downloads, for example, the image information 50 (115). Also, the terminal 1C downloads the rotation information 51 linked to the image information 50 (Arrow 116).

At this time, the terminal 1C reads out the rotational state (in FIG. 1, noted as a terminal horizontal information 117) of the terminal detected by the terminal horizon detection mechanism 11. Then, the terminal 1C synthesizes the designation of the rotation information 51 with the terminal horizontal information 117 (118), and rotates the image information 50 to display the image information 50 (119).

Here, synthesizing the designation of the rotation information 51 of the image information 50 with the terminal horizontal information 117 implies the following process. For example, let us suppose a case where the rotation information 51 of the image information 50 is 90 degrees in the clockwise direction and the terminal 1C itself is rotated by 90 degrees in a counterclockwise direction. In this case, the original screen top end of the terminal 1C is located on the left side. Thus, in order to rotate the image by 90 degrees in the clockwise direction and display, it is enough to rotate the image itself by 180 degrees in the clockwise direction. In this way, the terminal 1C displays the image at the orientation specified in accordance with the rotation information 51, in the rotational state of the current display unit.

It should be noted that, also in this case, if the orientation (rotational state) of the image displayed on the terminal 1C is not correct, e.g., the image is upside down, the user rotates the image in accordance with the menu on the terminal 1C. Moreover, the user of the terminal 1C uploads the rotation information, which is used when the image is rotated, to the server 2 as the new rotation information. However, in the case of such an upload, the terminal 1C uploads the rotation information, where information on the rotational state (the foregoing terminal horizontal information 117) of the display unit of the terminal 1C is removed from the rotation information synthesized by the foregoing process, to the server 2.

In this way, the user of the terminal 1A or the like, if the orientation (rotational state) of the image displayed on each terminal is not correct, resets and uploads the rotation information.

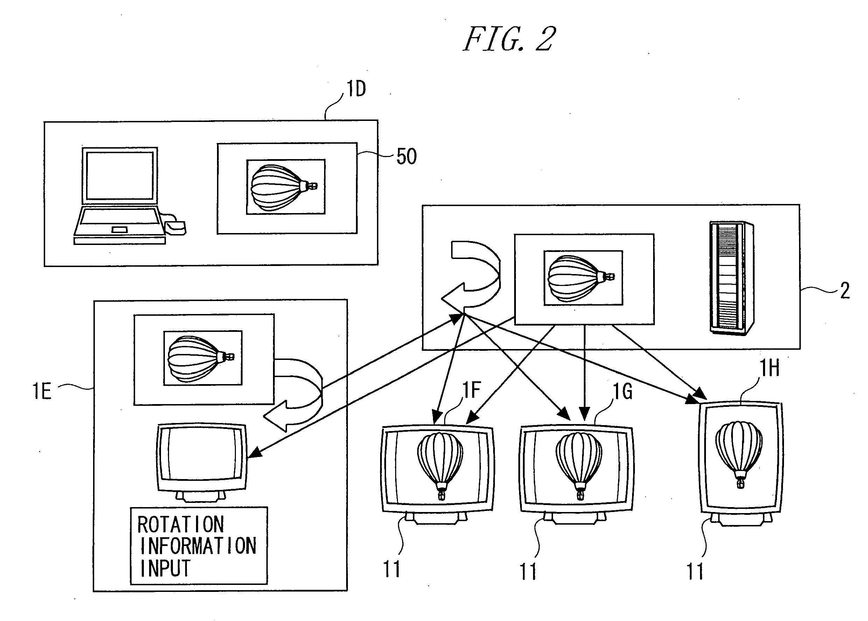

FIG. 2 is a view showing a process example of the information system. Also in FIG. 2, similarly to those in FIG. 1, terminals 1D to 1H and the server 2 are connected through the network.

In FIG. 2, at first, the terminal 1D (personal computer) registers the image information 50 in the server 2. Next, another terminal 1E downloads and displays the image information 50. At this time, a user of the terminal 1E changes the rotation information set for the image information 50. The change of the rotation information is uploaded to the server 2.

Next, another terminals 1F, 1G, 1H and the like download the image information 50 and display the images in accordance with the changed rotation information. All of the terminals 1F, 1G and 1H have the terminal horizon detection mechanisms 11.

The terminals 1F, 1G are the examples of the terminals of the lateral arrangement and display the image information 50 rotated on the lateral screen. Also, the terminal 1H is the example of the terminal of the longitudinal arrangement and displays the image information 50 rotated on the longitudinal screen. That is, the terminals 1F, 1G, 1H and the like recognize the vertical directions of the screens through the terminal horizon detection mechanisms 11 and then display the rotated image information 50.

The rotation information of the image may be stored in the same file as the image information or may be possessed as another related file. Also, the image itself may be processed.

As mentioned above, the rotation information of the updated image is uploaded to the server 2. Such uploading may be executed in such a case where the user sets or changes the rotation information. The uploading may also be executed periodically from the terminals 1D to 1H to the server 2.

Moreover, in the information system, the server 2 evaluates the collected rotation information and the like. For example, when one or more persons set the same rotation information, the rotation information is registered as the normal information. On the other hand, if a plurality of users set different rotation information, the normal registration content is determined bymaj ority. However, the weight average based on the number of persons may be employed. Also, an authorized manager may set the rotation information and the like of the image in the server 2. In this embodiment, the normal registration content is referred to as a rotation angle for delivery.

It should be noted that when the terminals 1D to 1H and the like display the downloaded images, the attribute locally set for each terminal may be assigned higher priority to be used than the rotation information normally registered in the server 2.

### <Terminal Example>

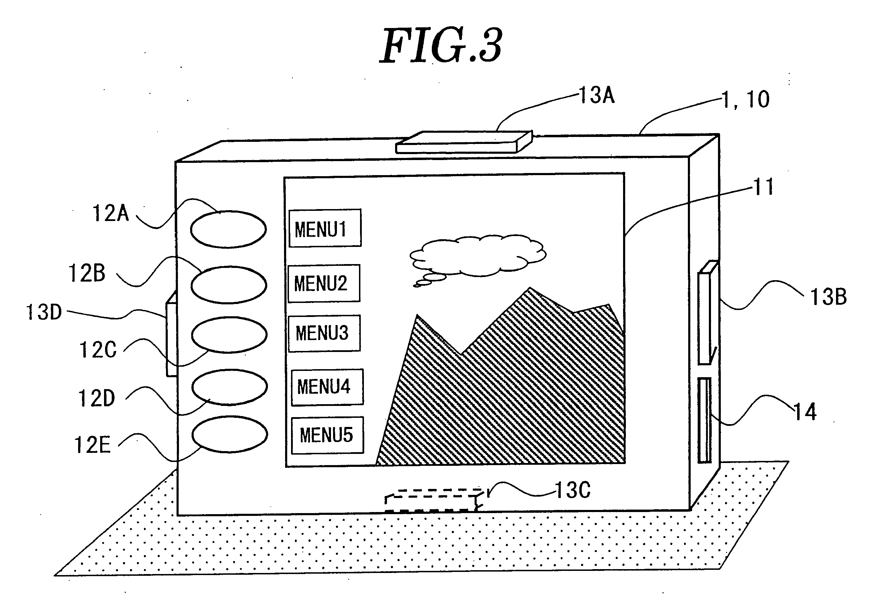

In FIG. 1 and FIG. 2, as the terminal 1 (1A to 1H) and the like, the information apparatus such as PDA (Personal Digital (Data) Assistants) is assumed. However, in the information system, the terminal 1 is not limited to the above-mentioned information apparatus. FIG. 3 shows an example of another terminal 1. The terminal 1 is referred to as a so-called digital photo frame and has a function for downloading the image information from the server 2 and displaying the image information.

The terminal 1 has the configuration in which a display unit 15, push buttons 12A to 12E, and installation direction detection sensors 13A to 13D are assembled in a body 10.

The display unit 15 is a liquid crystal display, a plasma display, an EL (electroluminescence) panel or the like. The display unit 15 displays menus (in FIG. 3, MENU1 to MENU5), in addition to the image downloaded from the server 2 and the like.

Those menus can be executed by pushing down the push buttons 12A to 12E. As the processes corresponding to those menus, for example, there are the setting or change of the rotation information of the image, the uploading to the server 2 of the image and rotation information, and the like. By the way, a detachable medium, for example, an interface such as CD (Compact Disk), DVD, a flash memory card or the like, is installed in the terminal 1, and the image read out from the medium may be displayed, or uploaded to the server 2.

The installation direction detection sensors 13A to 13D have push buttons and contact switches. If they are pushed, their directions are judged to extend downwards in a vertical direction (there is a table where the terminal 1 is placed). As a result, similarly to the terminals 1F to 1H shown in FIG. 2, the terminal 1 can detect the rotational state of the display unit 15 and display the image in accordance with the rotation information. Thus, even if the user places the terminal 1 in a longitudinal or lateral posture, the image is never erroneously displayed upside down.

Also, by setting the menu as mentioned above, it is possible to hide the menu itself. In order to change the menu from the hidden state to the displayed state, for example, it is enough to detect a user operation through the push button 12A.

### <Data Structure>

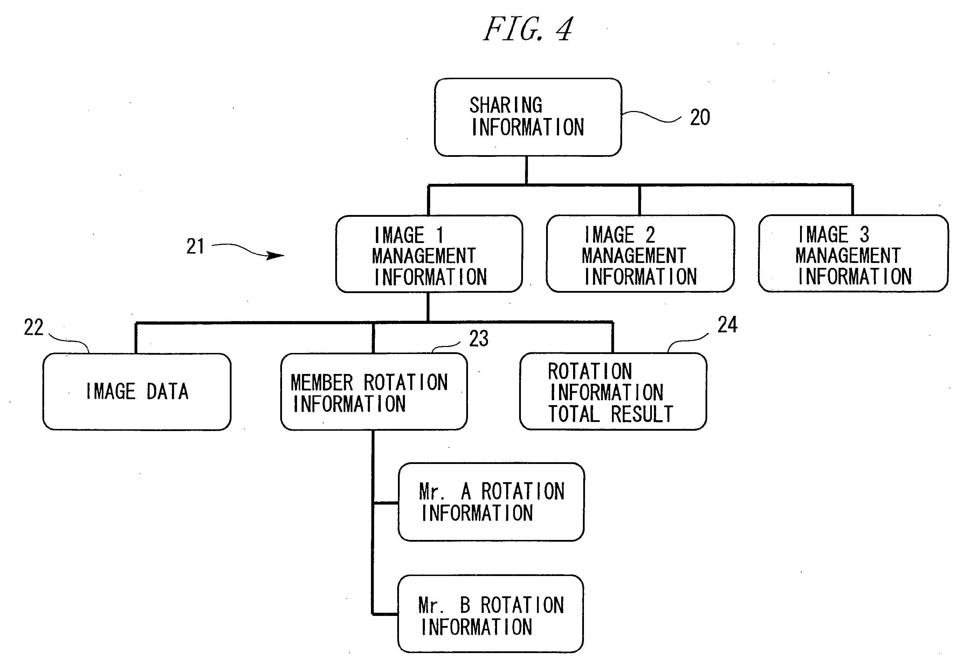

FIG. 4 shows the data structure of the management information for holding the rotation information of the image in the server 2 shown in FIG. 1. In the server 2, a user belongs to a group composed of a plurality of users. The user in the group is referred as a member. The image uploaded by a certain user is used by the members of the group to which the user belongs.

The rotation information is associated with the image information registered in the server 2 and retained for each group of the users. The data structure for managing the foregoing rotation information is referred to as the management information. The data structure of this management information includes sharing information 20, image management information 21 for identifying the image , image data 22, member rotation information 23 and a rotation information totalizing result 24.

The sharing information is the information to define this group of the users. For example, if the group is equivalent to one family, the sharing information includes the information to specify the family, the information on the members of the family, and the like.

The image management information 21 is the information to identify the individual image. FIG. 4 illustrates this information like an image 1 management information, an image 2 management information and an image 3 management information. Moreover, FIG. 4 shows the image data 22 belonging to one imagemanagement information (image 1 management information), the member rotation information 23 and the rotation information totalizing result 24.

The image data 22 stores the data itself constituting the image, or a folder name (directory name) of a folder storing the data, and a file name inside the folder. The member rotation information is the rotation information set by the member of the group and is stored for each member. For example, if Mr. A, Mr. B, etc. belong to the group, the Mr. A rotation information, the Mr. B rotation information and the like are stored.

The rotation information totalizing result 24 is the information on the totalized member rotation information which is registered as the normal rotation information (delivery rotation angle).

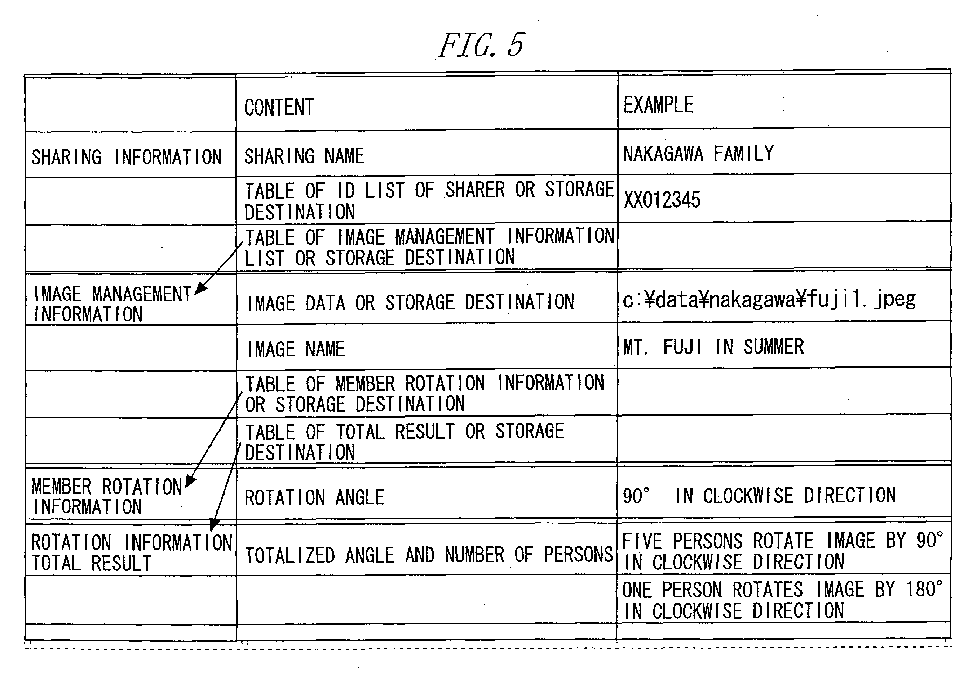

FIG. 5 shows a data example of the management information shown in FIG. 4. In this example, sharing information has a sharing name, a table of an ID list of sharers (or a storage location), and a table (or a storage location) of an image management information list.

The sharing name is the group name of the user. In FIG. 5, a name of a family of "Nakagawa Family" is exemplified. Also, the table of the ID list of the sharers is the list of the user IDs of the members belonging to the group. This list may be directly stored in the sharing information, or may be stored in another table, and then the information indicating the storage location such as a start address thereof may be held in the sharing information.

The image management information list is the list of the image management information 21 shown in FIG. 4 and constitutes one element for each image. Even this image management information list may be directly stored in the sharing information, or may be stored in another table, and then the information indicating the storage location such as a start address thereof may be held in the sharing information.

In FIG. 5, one element of the image management information list is explicitly shown. This image management information includes: image data (or a storage location); an image name (for example, "Mt. Fuji in Summer"); a table (or a storage location) of the member rotation information; and a table (or a storage location) of the totalized information.

The image information may be directly stored in the image data, or the image information may be stored in another file or the like, and the storage location such as the file name may be held. In the example of FIG. 5, the image information itself is stored in another file (for example, c:¥data¥nakagwa¥fuji1.jpg).

Also, in the example of FIG. 5, the fact that the rotation information of a certain member is 90 degrees in the clockwise direction is exemplified. Also, it is known from the totalized information that five persons rotate an image by 90 degrees in the clockwise direction and one person rotates the image by 180 degrees in the clockwise direction.

### <Process Flow>

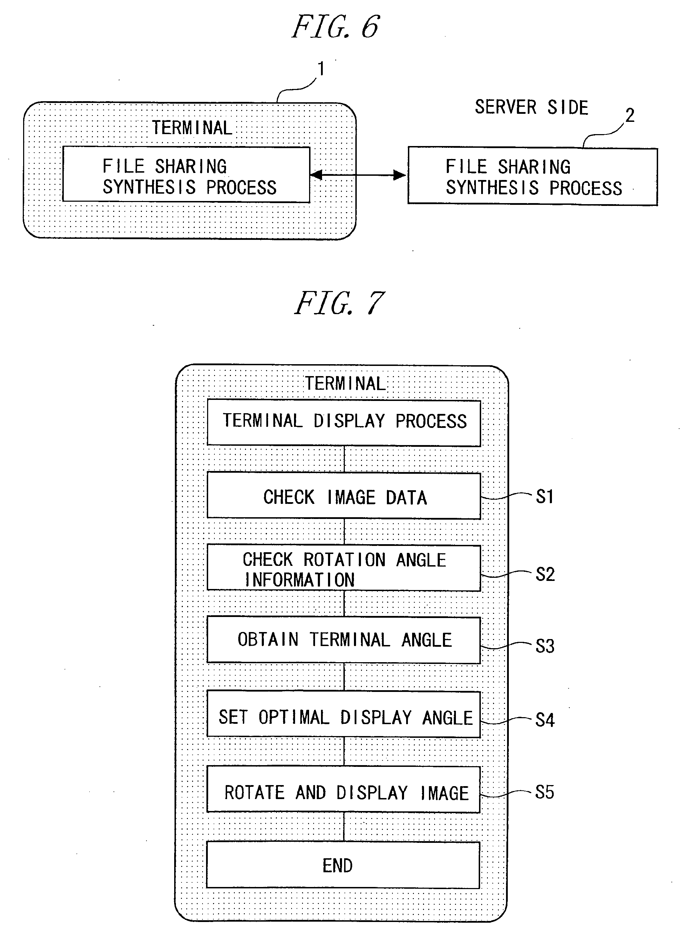

FIG. 6 shows the functional relation between the terminal 1 and the like and the server 2 in this information system. In this information system, the terminal 1 and the like and the server 2 are linked to each other and share the files. That is, the terminal 1 and the like and the server 2 periodically compare the files located within the mutual sharing region.

Then, for example, if a file located in the download target region on the server 2 is not included in the terminal 1, the file is downloaded to the terminal 1 from the server 2. Also, for example, if a file of an upload target on the terminal 1 is not located on the server 2, such a file is uploaded. Such a process is referred to as a file sharing synchronization process.

FIG. 7 is a flowchart showing an image displaying process in the terminal 1. This process is implemented using a program that a CPU (not shown) in the terminal 1 can execute. Note that in the following process, the image information is also referred to as the image data.

In this process, the terminal 1 firstly checks the image data, the rotation information related to the image data and the like (S1). Then, the terminal 1 reads out the rotation information (in FIG. 7, referred to as rotation angle information) of the image data (S2). Note that this rotation information is originally delivered from the server 2. However, if the terminal 1 locally sets the rotation information, a priority is given to the setting.

Next, the terminal 1 obtains the orientation of the display unit (terminal angle), through the terminal horizon detection mechanism 11 shown in FIG. 1 and the installation direction detection sensors 13A to 13D shown in FIG. 3 and the like (S3).

Next, the terminal 1 sets an angle (in FIG. 7, referred to as an optimal display angle) at which the image is displayed, from the rotation information read out at the S2 and the orientation of the display unit obtained at the S3 (S4). Then, the terminal 1 rotates the image at the angle and displays the resulting image. Through the foregoing process, the terminal 1 displays the image which is properly set in terms of the orientation in the vertical direction and the like, independently of the orientation of the display unit.

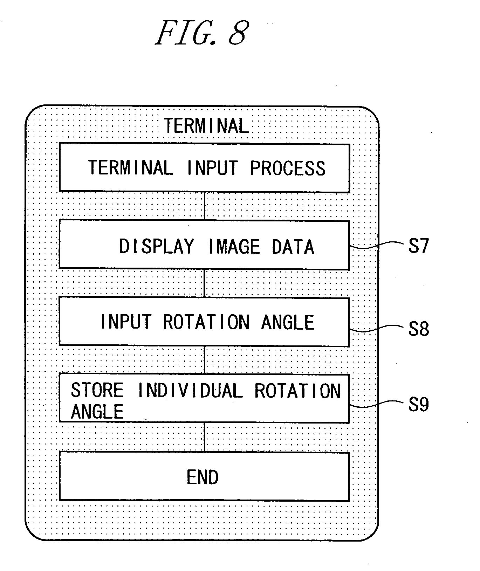

FIG. 8 is a flowchart showing a rotation information input process in the terminal 1. In this process, the terminal 1 firstly displays the image data (S7). Note that the detail of the process for displaying the image data has been explained with reference to FIG. 7.

Next, the terminal 1 receives a rotation angle input of the user (S8). Here, the rotation angle input implies the operation for setting the rotation information, for example, "Rotate 90 Degrees Clockwise", for the image currently being displayed.

Then, the terminal 1 stores the input rotation angle in accordance with a user operation (S9). This storing operation is such that the input rotation angle is firstly stored in the local memory of the terminal 1, and then transmitted from the terminal 1 to the server 2, and stored as the management information having the data structure shown in FIG. 4 and FIG. 5. This locally stored rotation angle is used by the terminal 1 , in preference to the delivery rotation angle that is normally registered in the server 2. On the other hand, the server 2 totalizes the rotation angles set by the plurality of members, and determines the normal rotation information (delivery rotation angle), for example, by majority, and registers it.

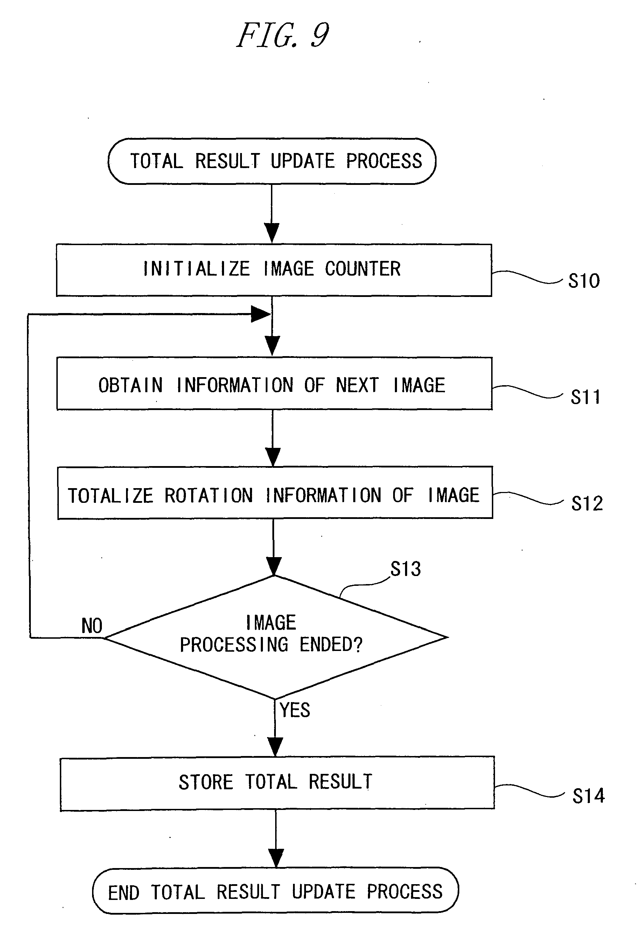

FIG. 9 is a flowchart showing a totalizing result update process of the rotation information in the server 2. This process is implemented using a program that the CPU (not shown) in the server 2 can execute.

In this process, at first, the server 2 initializes an image counter (S10). Here, the image counter is the variable to measure the number of image data transmitted from the terminal 1 or the like.

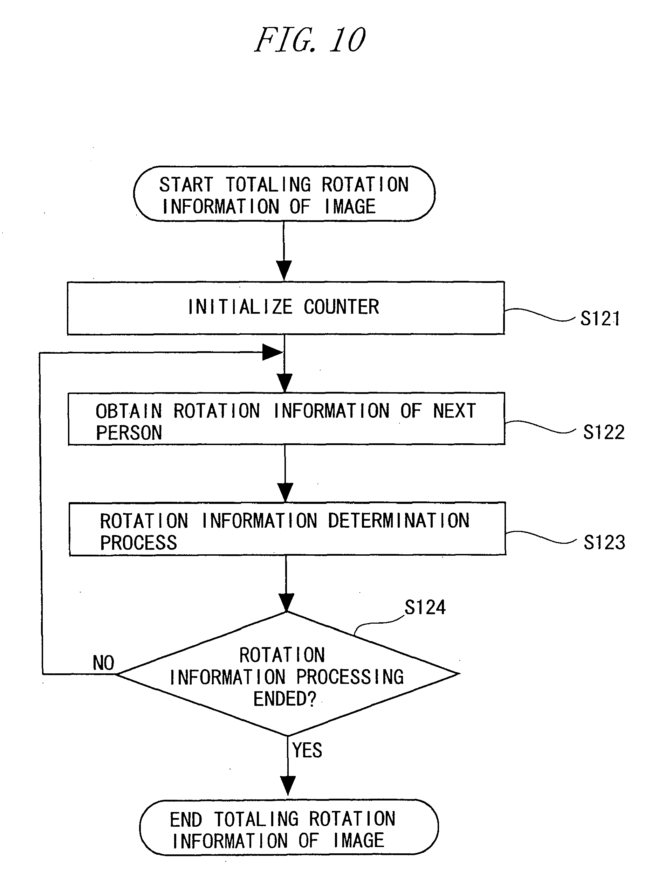

Then, the server 2 obtains the information of the next image from the terminal 1 of the like (S11). At this time, the server 2 obtains even the rotation information, together with the image data. Next, the server 2 totalizes the rotation information of the image (S12). Note that the detail of this totalizing process is explained with reference to FIG. 10.

Next, the server 2 judges whether or not all of the images sent from the terminal 1 or the like have been processed (S13). This judgment is made based on whether or not a counter value exceeds a predetermined value (the total number of image data),after the image counter is incremented by 1. If the process for all of the images has not been ended, the server 2 returns the control process to the S11.

On the other hand, if the process for all of the images has been terminated, the server 2 stores the totalizing result (S14). Then, the server 2 ends the totalizing result update process.

FIG. 10 is a flowchart showing the rotation information totalizing process (S12 of FIG. 9) of the image in the server 2. In this process, the server 2 firstly initializes a counter (S121) This counter is used to identify the input rotation information.

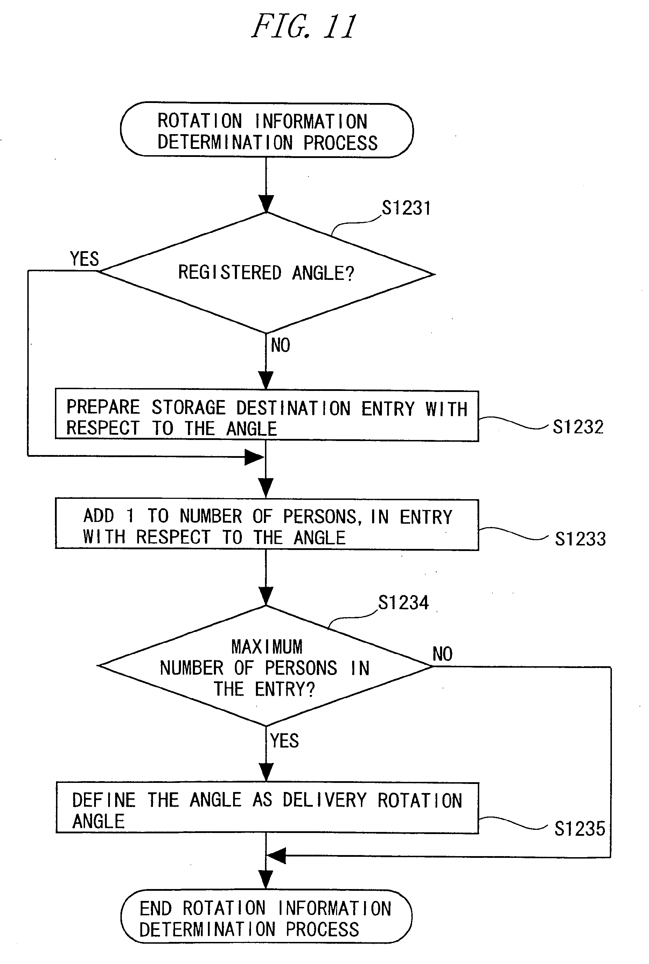

Then, the server 2 obtains the rotation information of the next member (S122). Then, the server 2 executes a rotation information determination process (S123). The detail of this rotation information determination process is explained with reference to FIG. 11.

Next, the server 2 judges whether or not the process for all of the rotation information sent from the terminal 1 or the like has been ended (S129). This judgment is executed by whether or not a counter value exceeds a predetermined value (the total number of rotation information), after the counter is incremented by 1. If the process for all of the rotation information has not been ended, the server 2 returns the control process to the S122.

On the other hand, if the process for all of the rotation information has been ended, the server 2 ends the rotation information totalizing process.

FIG. 11 is a flowchart showing a determination process of the rotation information in the server 2. This process determines the normal rotation angle by majority, from a plurality of prestored rotation angles.

The server 2 firstly judges the rotation angle and judges whether or not the angle has been already registered in a totalizing process table (S1231). Then, if the angle has not been yet registered, a new entry is prepared for the total process table (S1232). That is, the entry is reserved, and the angle is registered.

Next, the server 2 increments the number of persons by 1, at the angle (S1233). Whether or not the number of persons is greater than a current maximum value is judged (S1234)

If the number of persons in the entry is greater than the current maximum value, the rotation angle is defined as the delivery rotation angle (S1235). The delivery rotation angle is the rotation angle set when the server 2 delivers the image to the terminal 1 and the like. Moreover, the number of persons in the entry at that time is set for the current maximum value. After that, the server 2 ends the rotation information determination process.

As mentioned above, according to this information system, the rotation information (for example, the rotation angle set with the normal line passing a predetermined position inside the image defined as a rotation axis) can be set for the image data. Thus, the image data taken by a digital camera or the like can be displayed in the correct direction (for example, right side up so as to match with a subject).

Also, according to this information system, the user can freely set the display direction for the image data shared on the server 2. Thus, the user who next uses the image does not need to set the rotation angle individually.

Also, according to this information system, even if the plurality of users set the different rotation information, the correct rotation information can be determined by majority or number-weighted averaging method. Thus, even if some users carry out the erroneous setting, finally, the possibility that the correct rotation information is set is high.

Also, according to this information system, the terminal 1 and the like have the sensors (the terminal horizon detection mechanism 11 and the installation direction detection sensors 13A to 13D) for detecting the rotational state of the display unit. Thus, on the basis of the rotational state of the display unit, the image can be displayed in the correct direction.

### <Modified Example>

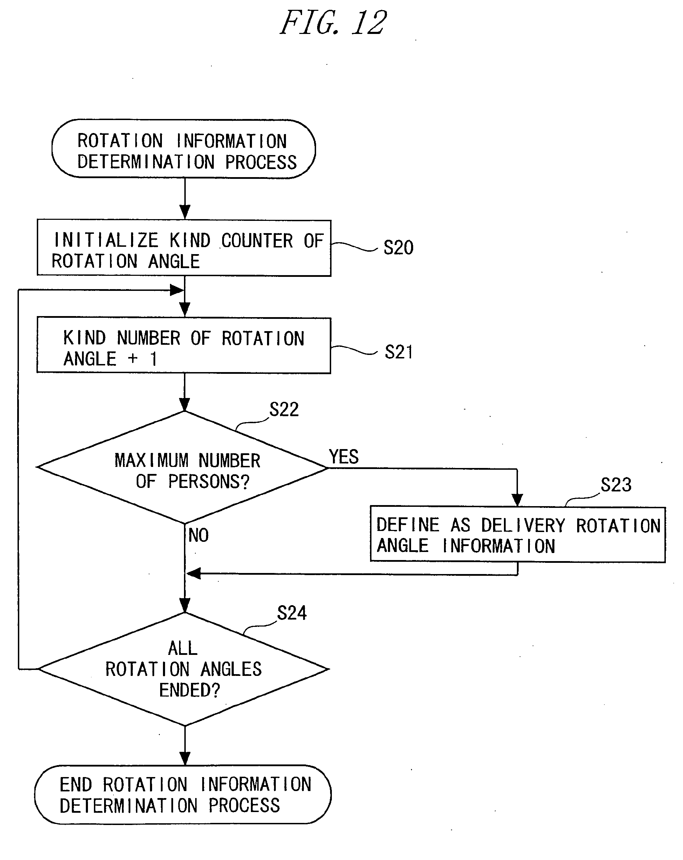

In the foregoing embodiment, as shown in FIG. 10 and FIG. 11, the rotation information determination process is executed in the loop (S122 to S124 of FIG. 10) of the rotation information totalizing process). However, the rotation information determination process and the rotation information totalizing process may be separately executed. FIG. 12 shows the modified example of the rotation information determination process. In FIG. 12, the rotation information totalizing process is independently executed after the rotation information totalizing process. It is assumed for this process, that the number of persons for each rotation angle is totalized in a predetermined table.

The server 2 firstly initializes a kind counter of the rotation angle (S20). This kind counter is used to identify the number of kinds of the rotation information. Next, the server 2 increments a kind number counter of the rotation angle by 1 (S21).

Then, from the entry of the table indicated in the kind counter of the rotation angle, the number of persons in the entry (the number of persons in the kind at the rotation angle) is read out, and compared with the maximum number of persons (S22). Then, if the number of persons read out from the entry is greater than the maximum number of persons, the rotation angle of the entry is determined as the delivery rotation angle (S23). Moreover, the number of persons in the entry is set as the maximum number of persons.

Next, the server 2 judges whether or not the process for all of the entries (the rotation angles) in the table has been ended (S124). This judgment is made based on whether or not the counter value exceeds a predetermined value (the total number of entries in the table), after the counter is incremented by 1. If the process for all of the rotation angles has not been ended, the server 2 returns the control process to the S21.

On the other hand, if the process for all of the rotation angles has been ended, the server 2 ends the rotation information determination process.

### <Recording Medium that can be read by Computer and the like>

A program which causes the computer, other apparatuses and machines, and the like (hereafter, referred to as the computer and the like) to execute any of the foregoing functions can be recorded on the recording medium that can be read by the computer and the like. Then, by causing the computer and the like to read and execute the program of this recording medium, the function can be provided

Here, the recording medium that can be read by the computer and the like implies a recording medium where the information of the data, the program, and the like are accumulated by an electric, magnetic, optical, mechanical or chemical action and can be read by the computer and the like. As a medium that can be removed from the computer and the like among the foregoing recording media, for example, there are a floppy disc (registered trademark), a magneto-optical disc, CD-ROM, CD-R/W, DVD, DAT, an 8 mm tape, a memory card and the like.

Also, as the recording medium built in the computer and the like, there are a hard disc, ROM (Read Only Memory) and the like.

### Industrial Applicability

The present invention is applicable to, the manufacturing industry of various information apparatuses such as the display apparatus of the electro-photography, and the service industrywhere various information apparatuses are used.

## Claims

1. An image registration apparatus for registering an image in a server for managing the image, including:
means for displaying the image;
means for receiving a setting of a rotation attribute for defining a rotational state of the image when the image is displayed; and
means for combining the image with the rotation attribute and registering the image in the server.

2. A display control apparatus, including:
means for receiving an image data which is delivered from a server managing the image and contains a rotation attribute to define a rotational state of the image when the image is displayed;
means for detecting an installation direction of a display apparatus for displaying the image; and
means for rotating the image with reference to the installation direction.

3. An image display apparatus, including:
means for receiving an image data which is delivered from a server managing the image and contains a rotation attribute to define a rotational state of the image when the image is displayed;
means for detecting an installation direction of a display apparatus for displaying the image;
means for rotating the image with reference to the installation direction; and
the display apparatus for displaying the image thus rotated.

4. An image management apparatus, including:
means for receiving a registration request of an image from a terminal apparatus;
means for receiving a designation of a rotation attribute to define a rotational state for an image, which was already registered, when the image is displayed;
means for determining one rotation attribute for an image in accordance with a predetermined criterion, when a plurality of rotation attributes are specified for the image; and
means for delivering the image under the rotation attribute thus determined.

5. A computer-executable program for causing a computer to register an image in a server for managing the image, including:
a step of displaying the image;
a step of receiving a setting of a rotation attribute to define a rotational state of the image when the image is displayed; and
a step of combining the image with the rotation attribute to register the image in the server.

6. A computer-executable program for causing a computer to execute:
a step of receiving an image data which is delivered from a server managing the image and contains a rotation attribute to define a rotational state of the image when the image is displayed;
a step of detecting an installation direction of a display apparatus for displaying the image; and
a step of rotating the image with the installation direction as a criterion,
the image being displayed on the display apparatus.

7. A computer-executable program for causing a computer to execute:
a step of receiving a registration request of an image from a terminal apparatus;
a step of receiving a designation of a rotation attribute to define a rotational state for an image, which was already registered, when the image is displayed;
a step of determining one rotation attribute of an image in accordance with a predetermined criterion when a plurality of rotation attributes are specified for the image; and
delivering the image under the rotation attribute thus determined.
